# EUROPÄISCHE PATENTSCHRIFT

(11) **EP 2 454 894 B1**
(45) Veröffentlichungstag und Bekanntmachung des Hinweises auf die Patenterteilung: **31.01.2018**
(21) Anmeldenummer: 10742781.7
(22) Anmeldetag: 16.07.2010
(51) Int. Cl.: H04W 4/20, H04W 4/02, H04L 29/08, H04W 8/00

(54) **SYSTEM UND VERFAHREN ZUR ÜBERTRAGUNG VON DATEN ZWISCHEN KOMMUNIKATIONSENDGERÄTEN**
SYSTEM AND METHOD FOR TRANSMITTING DATA BETWEEN COMMUNICATION TERMINALS
SYSTÈME ET PROCÉDÉ POUR TRANSMETTRE DES DONNÉES ENTRE DES UNITÉS DE COMMUTATION

(30) Priorität: 17.07.2009 DE 102009027816
(43) Veröffentlichungstag der Anmeldung: 23.05.2012
(73) Patentinhaber: Hoccer Betriebs GmbH, 10787 Berlin (DE)
(72) Erfinder: MAYER, Pavel, 10435 Berlin (DE); LÜSEBRINK, Dirk, 10437 Berlin (DE); TRAPPE, Rodja, 10437 Berlin (DE); SIEGEL, David, 13351 Berlin (DE)
(74) Vertreter: Maikowski & Ninnemann Patentanwälte Partnerschaft mbB
(86) Internationale Anmeldenummer: PCT/EP2010/060370
(87) Internationale Veröffentlichungsnummer: WO 2011/007010

(56) Entgegenhaltungen:
- WO-A1-2008/014014
- WO-A2-02/49374
- GB-A- 2 390 510
- US-A1- 2002 140 625
- US-A1- 2002 165 919
- US-A1- 2006 256 074
- MAHTAB HOSSAIN A K M ET AL: "A Comprehensive Study of Bluetooth Signal Parameters for Localization", IEEE INTERNATIONAL SYMPOSIUM ON PERSONAL, INDOOR AND MOBILE RADIO COMMUNICATIONS. PIMRC, IEEE; PI, XX, 1. September 2007 (2007-09-01), Seiten 1-5, XP031168293, ISBN: 978-1-4244-1143-6

## Beschreibung

Es ist häufig wünschenswert, Daten, wie z.B. etwa Adressen, Telefonnummern oder beliebige andere Daten spontan von einem Kommunikationsendgerät eines Teilnehmers zu einem anderen Kommunikationsendgerät zu übermitteln.

Hierfür ist es bisher erforderlich, dass die Kommunikationsendgeräte entweder zuvor eine Kommunikationsadresse austauschen, etwa eine Telefonnummer oder E-Mail Adresse, oder im Falle des Austauschs über eine lokale Ad-Hoc Verbindung über Bluetooth oder Infrarot, ein Teilnehmer den anderen aus einer Liste auswählt.

Die WO 02/49374 A2 beschreibt ein Verfahren zum Herstellen einer Kommunikation zwischen Teilnehmern von drahtlosen Kommunikations- / Datennetzen, die sich in einem Abstand befinden, der einen Augenkontakt während eines vorbestimmten Zeitintervalls ermöglicht.

Es besteht die Aufgabe, einen schnellen Datenaustausch zu erleichtern.

Diese Aufgabe wird durch ein System mit den Merkmalen des Anspruchs 1 und ein Verfahren nach Anspruch 14 gelöst.

Das System weist mindestens ein erstes Kommunikationsendgerät und mindestens ein zweites Kommunikationsendgerät auf, wobei mindestens eines der Kommunikationsendgeräte als mobiles Gerät, insbesondere Handgerät, ausgebildet ist. Die Kommunikationsendgeräte sind über ein Datennetzwerk mit einer Vermittlungseinheit koppelbar. Zu dem System gehören ein Mittel zur Berechung und / oder Auswertung der räumlichen Distanz der Kommunikationsendgeräte und ein Mittel zur Bestimmung und / oder Auswertung von zeitlichen Abständen von Kommunikationsanfragen an die Vermittlungseinheit, um eine Datenübertragung zwischen den mindestens zwei Kommunikationsendgeräten einzuleiten. Dabei steuert ein Verbindungsmittel der Vermittlungseinheit, in Abhängigkeit von vorgebbaren Schwellenwerten der räumlichen Distanz der mindestens zwei Kommunikationsendgeräte und des zeitlichen Abstandes zwischen den Kommunikationsanfragen die Datenübertragung. Die Kommunikationsanfrage ist an mindestens einem Kommunikationsendgerät durch Betätigen mindestens einer Taste an mindestens einem Kommunikationsendgerät, eine Bewegung des mindestens einen Kommunikationsendgerätes im Raum, ein akustisches Signal, eine Spracheingabe und / oder Berühren des berührungssensitiven Bildschirms auslösbar und eine entsprechende Kodierung wird in der Kommunikationsanfrage und / oder dem Anfragedatensatz gespeichert.

Damit reichen Orts- und Zeitinformationen aus, um eine Datenübertragung einzuleiten und zu steuern. Dabei stellen die Kommunikationsendgeräte und die Vermittlungseinheit jeweils unabhängige Geräte dar, die besonders für die Verwendung in dem System oder dem Verfahren eingerichtet und ausgebildet sind.

Beispielhafte Ausführungsformen werden im Zusammenhang mit den folgenden Abbildungen beschrieben. Es zeigen:
Fig. 1 eine erste Ausführungsform unter Verwendung eines Systems und eines Verfahrens zur Datenübertragung;
Fig. 2 eine zweite Ausführungsform unter Verwendung eines Systems und eines Verfahrens zur Datenübertragung;
Fig. 3 eine dritte Ausführungsform unter Verwendung eines Systems und eines Verfahrens zur Datenübertragung unter Verwendung eines Datenaustauschknotens;
Fig. 4 eine vierte Ausführungsform unter Verwendung eines Systems und eines Verfahrens zur Datenübertragung unter Verwendung eines Datenaustauschknotens;
Fig. 5 eine Darstellung der räumlichen Distanz zwischen drei Kommunikationsendgeräten;
Fig. 6 eine Darstellung eines zeitlichen Abstandes zwischen zwei Kommunikationsanfragen;
Fig. 7 eine UML-Darstellung des Datenaustauschs gemäß der Ausführungsformen in Fig. 3, 4;
Fig. 8 eine schematische Darstellung einer Ausführungsform eines Kommunikationsendgerätes;
Fig. 9A, B eine schematische Darstellung einer Verwendung zur Datenübertragung zwischen zwei Kommunikationsendgeräten.

Im Folgenden wird aus Gründen der Einfachheit meist von zwei mobilen Kommunikationsendgeräten 10, 20 ausgegangen, wobei grundsätzlich auch mehr als zwei Kommunikationsendgeräte 10, 20 verwendet werden können. Auch ist es grundsätzlich möglich, dass eines oder mehrere Kommunikationsendgeräte 10, 20 stationär sind.

Mit den Ausführungsformen ist ein schnellerer und einfacherer Datenaustausch möglich, der in Abhängigkeit vom Ort der Kommunikationsendgeräte 10, 20 und in Abhängigkeit von der zeitliche Nähe der Kommunikationsanfragen 200 zwischen den Kommunikationsendgeräten 10, 20 mit Hilfe einer über ein Datennetzwerk 100 erreichbaren datenverarbeitenden Vermittlungseinheit 30 (auch Vermittlungsknoten genannt) erfolgt. Die Kommunikationsanfrage kann einen Anfragedatensatz 70 aufweisen.

Die Vermittlungseinheit 30 wird für die Kommunikationsendgeräte 10, 20 dadurch definiert, dass alle Kommunikationsendgeräte 10, 20, die an dem Datenaustausch teilnehmen wollen, diese Vermittlungsstation 30 als solche anerkennen und in der Lage sind, mit der Vermittlungsstation 30 zu kommunizieren.

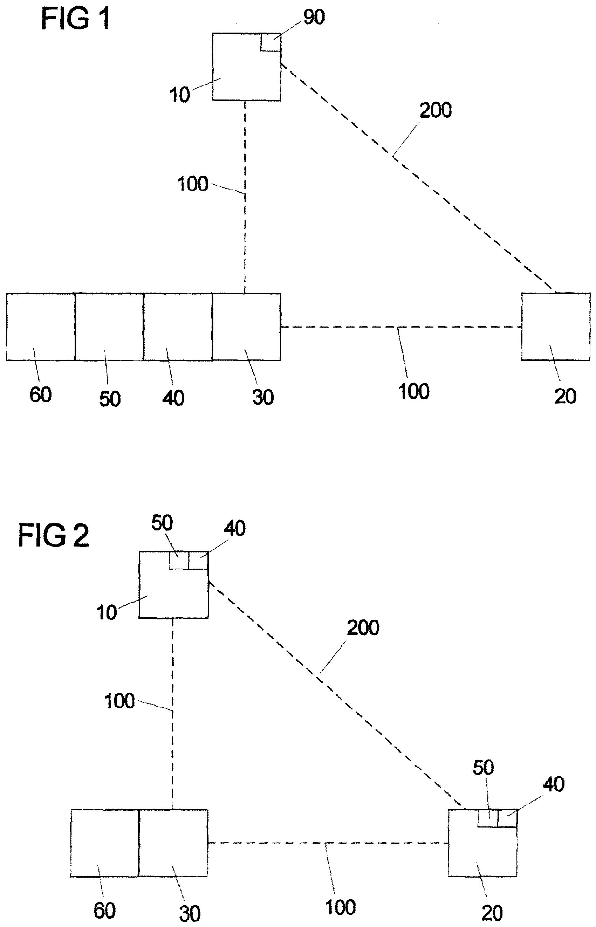

Ein beispielhaftes Benutzungsszenario einer ersten Ausführungsform soll im Zusammenhang mit der Fig. 1 erläutert werden.

Auf einer Konferenz lernen sich zwei Personen kennen und möchten ihre Kontaktdaten austauschen; beide Personen verfügen über ein mobiles Kommunikationsendgerät 10, 20 (Datenverarbeitungs- und Kommunikationsgerät, z.B. ein so genanntes Smartphone oder einen tragbarer Computer), das über eine Kommunikationsschnittstelle zum Internet und eine Ortungsfunktion verfügt, die den Ort der Kommunikationsendgeräte 10, 20 ermittelt.

Eine Möglichkeit der Ortsbestimmung ist ein GPS-System, mit dem die geographischen Koordinaten bestimmbar sind; weitere Methoden der Ortsbestimmung werden noch erläutert werden.

Beide Kommunikationspartner aktivieren die vorgesehene Kommunikationsfunktion auf dem jeweiligen Kommunikationsendgerät 10, 20. Der sendende Partner wählt zudem eine zu sendende Information aus; einen Nutzdatensatz 90. Der Nutzdatensatz 90 kann z.B. eine Datei oder eine URL sein. In Fig. 1 ist der Nutzdatensatz 90 auf dem Kommunikationsendgerät 10 des Senders gespeichert. Dies muss nicht zwingend der Fall sein. Wie später noch erläutert wird, kann der Nutzdatensatz 90 auch auf einer anderen Einheit gespeichert sein.

Im vorliegenden Beispiel würde der Nutzdatensatz 90 die Kontaktdaten des sendenden Partners aufweisen (oder zumindest einen Link auf den Nutzdatensatz 90).

Die Aktivierung und Auswahl der Kommunikationsanfrage 200 kann durch Drücken einer Taste, einer Auswahl auf einem Touchscreen, eine akustische Spracheingabe und / oder durch eine spezifische Bewegung eines der Kommunikationsendgeräte 10, 20 erfolgen, die durch im Kommunikationsendgerät 10, 20 enthaltene Beschleunigungssensoren als Teil eines Gesteninterpretationsmittel 80 erkannt wird. Das Gesteninterpretationsmittel 80 weist einen Rechner auf, der gemessene Beschleunigung (lineare Beschleunigungen, Winkelbeschleunigungen) misst und daran eine bestimmte Bewegung (Geste) erkennt.

Insbesondere erlaubt dies einen besonders schnellen und intuitiven Austausch von Daten. So ist es z.B. möglich, die Kommunikationsendgeräte 10, 20 so zu programmieren, dass eine kurze schleudernde (oder auch nickende) Bewegung des Kommunikationsendgerätes 10, 20 durch Beschleunigungssensoren erfasst wird und als Übertragungsgeste verstanden wird. Analog könnte beim empfangenden Kommunikationsendgerät 10, 20 eine ähnliche Geste programmiert sein. Die Beschleunigungssensoren (bzw. das Gesteninterpretationsmittel 80) ermöglichen, Gesten zu unterscheiden.

Die Herstellung einer Kommunikationsmöglichkeit durch Gesten ist besonders auch zwischen vielen Kommunikationsendgeräten 10, 20 möglich. Wenn z.B. ein Sender eine Nachricht an viele Kommunikationsendgeräte 10, 20 schicken will, führt er die Geste für die Kommunikationsanfrage 200 aus, die potentiellen Empfänger können jeweils die vorgesehene Geste für einen Empfang ausführen, worauf der Sender die Datenübertragung z.B. durch eine schleudernde Geste einleitet. Damit können vollkommen neue und intuitive Datenübertragungen durchgeführt werden, ohne dass die datenaustauschenden Personen Zugangsdaten, Adressen oder Telefonnummern austauschen müssen.

Um den Zeitpunkt der Interaktion zwischen den Kommunikationsendgeräten 10, 20 noch genauer einzugrenzen, kann nach der Aktivierung der Datenübertragung eine zusätzliche Aktion zur Bestimmung dieses Zeitpunkts implementiert sein. So können etwa die Kommunikationsendgeräte 10, 20 gegeneinander gestoßen oder mit dem einen Kommunikationsendgerät 10, 20 eine "Wurfgeste" ausgeführt werden, die mit einer vom anderen Teilnehmer mit dem Kommunikationsendgerät 10, 20 ausgeführten "Fanggeste" korrespondieren muss.

Die zeitliche Nähe der Aktivierung kann durch das Auslesen von geräteinternen und / oder über ein Datennetzwerk 100 synchronisierte Uhren gemessen und / oder mittels einer in der Vermittlungseinheit 30 befindlichen Uhr gemessen werden, die die Zeitpunkte des Eintreffens der Vermittlungsanfragen der Kommunikationspartner festhält.

Dabei können beide Verfahren zur Zeitmessung verwendet werden, um auf Seiten der Vermittlungseinheit 30 etwaige Fehler bei der Messung mittels geräteinterner Uhren zu erkennen und zu kompensieren. Alternativ kann die Vermittlungseinheit 30 einen eigenen Dienst zur Verfügung stellen, um die Abweichung der lokalen Uhren zu ermitteln und zu kompensieren.

Eine Möglichkeit, die Abweichung von Uhren in unterschiedlichen Kommunikationsendgeräten 10, 20 mit einem Kommunikationsvorgang auszugleichen, besteht darin, dass Datenpakete mit Zeitstempeln versehen werden und die Laufzeit der Datenpakte in beide Richtungen gemessen wird.

Der jeweilige Ort der Kommunikationseinheiten 10, 20 kann z.B. auf folgende Arten ermittelt werden:
Eine relativ grobe Art der Ortung erfolgt, indem über das Datennetzwerk die geographischen Koordinaten einer oder mehrerer Mobilfunkbasisstationen erfragt werden, mit denen mindestens ein Kommunikationsendgerät 10, 20 aktuell in Verbindung steht.

Eine genauere Ortung ist möglich, wenn das mindestens eine Kommunikationsendgerät 10, 20 sich in der Umgebung drahtloser WLAN Basisstationen befindet, deren Kennung empfangen werden kann, auch wenn keine Kommunikation über diese Basisstationen erfolgt. Sinnvollerweise wird die WLAN BSS ID verwendet.

Die Kennungen dieser WLAN-Basisstationen wird an einen Netzwerkdienst übermittelt, der die geographischen Positionen dieser Basisstationen kennt und daraus den Standort des anfragenden Kommunikationsendgeräts 10, 20 ermittelt.

Das Ermitteln der geographischen Koordinaten kann auch entfallen, wenn beide Kommunikationendgeräte 10, 20 die Kennungen (BSS-IDs) direkt an die Vermittlungseinheit 30 übermitteln. Die Vermittlungeinheit 30 kann in diesem Fall durch Vergleich der BSS-IDs in beiden Anfragen ermitteln, ob beide Kommunikationendgeräte sich in Reichweite derselben WLAN-Basisstation befinden und damit die erforderliche räumliche Nähe aufweisen. Diese Information reicht aus, um zusammen mit der zeitlichen Nähe der Anfragen einen Datenaustausch zu vermitteln.

Eine noch genauere Positionsermittlung ist möglich, wenn die Geräte über eine GPS-Ortungsvorrichtung verfügen und das Signal einer ausreichenden Anzahl von Satelliten empfangen können, was aber in Innenräumen oft nicht möglich ist.

Zusätzlich oder alternativ können auch Daten von Bluetooth Verbindungen ausgewertet werden, um die räumliche Distanz zwischen mindestens zwei Kommunikationsendgeräten 10, 20 zu ermitteln.

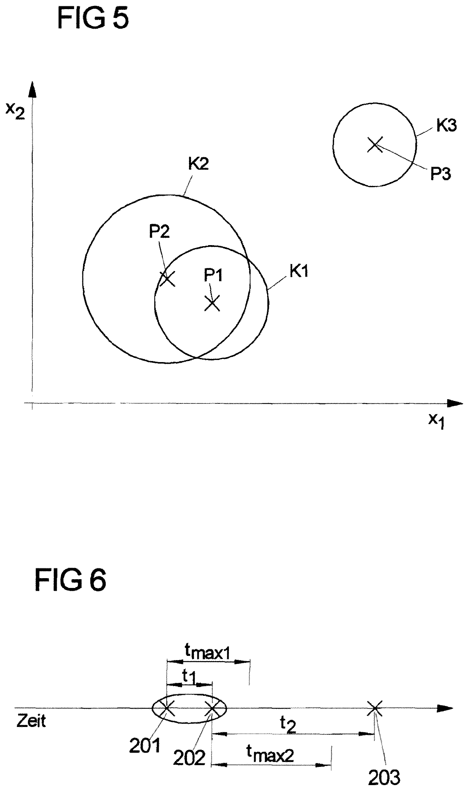

Es ist möglich, zwei oder drei der genannten Ortungsfunktionen transparent miteinander zu kombinieren. Sie liefern z.B. einen Längen- und Breitengrad in Verbindung mit einem Radius, der die Genauigkeit der Positionsbestimmung angibt. In Zusammenhang mit Fig. 5 wird dies noch genauer beschrieben werden.

Nachdem also die Aktivierung der Kommunikationsfunktion erfolgt ist, übermitteln beide Endkommunikationsgeräte 10, 20 das Ergebnis ihrer Ortsbestimmung und gegebenenfalls zusätzlich den genauen Zeitpunkt der Aktivierung an die Vermittlungseinheit 30.

Zur weiteren Einschränkung des Kreises der Kommunikationsteilnehmer können auch zusätzliche Daten übermittelt werden, etwa ein spontan vereinbarter PIN-Code oder Informationen, die Angaben über Art der zur Aktivierung durchgeführten Bewegung, die von den Beschleunigungssensoren erfasst wurden, sowie die räumliche Orientierung der Endgeräte, die von den Beschleunigungssensoren und / oder einem eingebauten Kompass, insbesondere einem magnetischen Kompass ermittelt wurde. So lässt sich beispielsweise das Zustandekommen einer Vermittlung auf die Kommunikationsendgeräte 10, 20 beschränken, die aufeinander weisen oder auf die ähnlich stark geneigt sind, was beispielsweise durch Aufeinanderlegen der Kommunikationsendgeräte 10, 20 erreicht werden kann.

Zusätzlich können die Kommunikationsendgeräte 10, 20 eine oder mehrere Kommunikationsadressen (etwa IP-Adresse, E-Mail Adresse etc.) übermitteln, unter der die Kommunikationsendgeräte 10, 20 jeweils erreichbar sind. Grundsätzlich ist dies ist jedoch nicht erforderlich, da die Kommunikation auch vollständig anonym über einen Datenaustauschdienst der Vermittlungseinheit 30 oder eine von ihr getrennte Datenaustauscheinrichtung erfolgen kann; dabei können vom Sender auch alternative Datenaustauscheinrichtungen gewählt werden, so dass bestimmte Benutzerkreise etwa eigene Datenaustauscheinrichtungen betreiben können.

Bevor jedoch die Übermittlung des Nutzdatensatzes 90 erfolgt, errechnet die Vermittlungseinheit 30 aus der räumlichen Nähe der übermittelten Orte der Kommunikationsendgeräte 10, 20, ggf. der Genauigkeit der Ortsbestimmung, der zeitlichen Nähe sowie gegebenenfalls der Zusatzdaten eine Zuordnung der Kommunikationspartner. Somit kann im einfachsten Fall eine Kommunikation zwischen Kommunikationsgeräten 10, 20 in Gang gesetzt werden, die nur darauf beruht, dass die Kommunikationsgeräte 10, 20 räumlich eng beieinander sind und zeitlich aufeinander abgestimmt Kommunikationsanfragen 200 senden.

Die Vermittlungseinheit 30 hat also nun Kenntnis, welche Kommunikationsendgeräte 10, 20 gerade mit wem kommunizieren möchten. Die Vermittlungseinheit 30 verfügt in der in Fig. 1 dargestellten Ausführungsform über ein Mittel 40 zur Auswertung der räumlichen Distanz zwischen den Kommunikationsendgeräten 10, 20, deren Funktion an einem Beispiel im Zusammenhang mit Fig. 5 näher erläutert wird. Ferner verfügt die Vermittlungseinheit 30 über ein Mittel 50 zur Auswertung von zeitlichen Abständen von Kommunikationsanfragen 200.

Außerdem ist der Vermittlungseinheit 30 ein Verbindungsmittel 60 zugeordnet, mit dem in Abhängigkeit von vorgebbaren Schwellenwerten für die räumliche Distanz und die zeitlichen Abstände die Datenübertragung gesteuert wird. Die Zuordnung bzw. Kopplung von Vermittlungseinheit 30 und Verbindungsmittel 60 erlaubt auch eine logische und / oder räumliche Trennung der Einheiten.

Es ist möglich, den Benutzern der Kommunikationsendgeräte 10, 20 eine gewisse Kontrolle über Trennschärfe dieser Berechnungen einzuräumen, indem etwa gewünschte Schwellenwerte für die räumliche und zeitliche Nähe vom Benutzer übermittelt werden können. Auch können diese Schwellenwerte automatisch gesetzt werden, z.B. auch in Abhängigkeit von der Dichte der Kommunikationsendgeräte 10, 20.

Die Schwellenwerte können sich nach den verwendeten Lokalisierungsverfahren oder den verwendeten Übertragungsmodi richten.

Sollen z.B. Daten zwischen Kommunikationsgeräten 10, 20 innerhalb einer Mobilfunkzelle übertragen werden, so kann die räumliche Distanz zwischen den Kommunikationsendgeräten 10, 20 bis zu 20 km betragen. Bei einer Lokalisation mittels WLAN-Netzwerken kann die räumliche Distanz bis zu 200 m betragen. Bei einer Lokalisation mittels GPS kann die räumliche Distanz bis zu 10 m betragen.

Wenn von einem Sender Daten an viele Kommunikationsendgeräte 10, 20 in einem großen Raum (z.B. ein Stadion) übertragen werden sollen, so kann der zeitliche Abstand bis zu 30 Sekunden betragen. Bei einer räumlich engeren Anordnung kann der zeitliche Abstand bis zu 5 Sekunden betragen. Bei einer direkten Berührung der Kommunikationsendgeräte 10, 20 kann ein zeitlicher Abstand von bis zu 100 ms ausreichen.

Die Vermittlungseinheit 30 erkennt z.B., dass zwei Kommunikationsendgeräte 10, 20 miteinander kommunizieren wollen, wenn innerhalb von weniger als 100 ms zwei Kommunikationsendgeräte 10, 20 innerhalb eines Radius von 10m eine Kommunikationsanfrage 200 aneinander, und dann an die Vermittlungseinheit 30 richten. Diese räumliche und zeitliche Bedingung reicht dem System und Verfahren aus, um zu sagen, dass zwischen diesen beiden Kommunikationsendgeräten 10, 20 ein Datenaustausch erfolgen soll. Mehr Informationen oder Bedingungen sind nicht notwendig. Die räumliche und zeitliche Nähe und deren Auswertung reichen für die Initiierung und die Durchführung des Datenaustausches aus.

Dennoch kann es in der Praxis im Falle einer ungenauen Ortsbestimmung der Kommunikationsendgeräte 10, 20 in Verbindung mit einer hohen Nutzungsfrequenz zu "Kollisionen" bei der Zuordnung kommen, etwa bei Veranstaltungen wie Kongressen. Auch hier kann dem Benutzer eine gewisse Kontrolle über das Verhalten der Vermittlungseinheit eingeräumt werden. So kann der Benutzer etwa bestimmen, ob ausschließlich eine Punkt-zu-Punkt Kommunikation erlaubt ist oder auch mehrere Empfänger gleichzeitig die gesendete Nachricht erhalten können.

Das Verhalten bei Sendekollisionen kann entsprechend gesteuert werden. Die Auswahl dieser Einstellungen kann auch ad-hoc durch unterschiedliche Aktivierungsgesten gewählt werden.

Damit ist es möglich, eine 1-zu-1 (siehe z.B. Fig. 1), eine 1-zu-Viele oder eine Viele-zu-Viele Kommunikation einzuleiten.

Wenn jetzt also die Vermittlungseinheit 30 erfolgreich eine Zuordnung von Kommunikationsendgeräten 10, 20 im Rahmen der Zuordnungsregeln durchgeführt hat, können die eigentlichen Daten, d.h. der Nutzdatensatz 90 übertragen werden.

Dabei können unterschiedliche Übertragungswege zum Einsatz kommen, wobei der Nutzer auch hier Präferenzen oder Beschränkungen vornehmen kann. Möchte der Benutzer etwa seine Anonymität gegenüber dem Kommunikationspartner wahren und nur ein Dokument übermitteln, so kann die Übertragung der Nutzdaten ausschließlich über die Vermittlungseinheit 30 erfolgen, die dann die Nutzdaten entgegennimmt, sie kurzzeitig zwischenspeichert und an den oder die Empfänger übermittelt.

Möchten die Nutzer dagegen nicht, dass die Vermittlungseinheit 30 Kenntnis von den Nutzdaten erlangt, werden stattdessen an den Sender nur die Adressen des oder der Empfänger übermittelt; die Übertragung der Nutzdaten erfolgt dann auf direktem Weg von Sender zu Empfänger. Letzteres ist aber nicht in allen Fällen möglich, etwa, wenn Sender und Empfänger sich in privaten, von außen nicht erreichbaren Netzen befinden. Hat dagegen mindestens einer der Teilnehmer eine öffentliche IP-Adresse, kann ein direkter Datentransfer initiiert werden. Dabei kann das System auch so ausgelegt sein, dass es automatisch den besten Übermittlungsweg ermittelt.

Für die Akzeptanz des Systems ist es auch sinnvoll, den Benutzern zeitnah den Erfolg oder das Misslingen der Vermittlung zu signalisieren. Dies kann vorzugsweise durch unterscheidbare akustische Signale oder Vibrationen des Kommunikationsendgerätes 10, 20 erfolgen. Dabei sind im Wesentlichen drei Arten von Signalen zu unterscheiden:
1) Erfolgreiche Vermittlung
2) Misslungene Vermittlung
2a) Kein Partner gefunden
2b) Zu viele Partner gefunden/Kollision
3) Erfolgreiche Übermittlung
3a) Erfolgreich gesendet
3b) Erfolgreich empfangen

Um die Latenz im Falle der Übermittlung über die Vermittlungseinheit 30 zu reduzieren, kann bereits sofort nach Auswahl der zu sendenden Daten mit der Übertragung begonnen werden, ohne die Aktivierungseingabe abzuwarten.

In Fig. 2 wird eine Variation der Ausführungsform gemäß Fig. 1 dargestellt, so dass grundsätzlich auf die Beschreibung der Fig. 1 Bezug genommen werden kann.

Die Ausführungsform der Fig. 2 unterscheidet sich von der Ausführungsform gemäß Fig. 1 dadurch, dass die Mittel 40 zur Auswertung der räumlichen Distanz und die Mittel 50 zur Auswertung zeitlicher Abstände nicht zentral an die Vermittlungseinheit 30 gekoppelt sind, sondern dezentral auf den Kommunikationsendgeräten 10, 20 angeordnet sind.

In jedem Fall werden diese Mittel 40, 50, wie auch die Vermittlungseinheit 30 und das Verbindungsmittel 60 selbst als Software und / oder Hardware realisiert. Dafür können übliche Rechner und / oder Prozessoren verwendet werden.

Es sei noch erwähnt, dass es auch möglich ist, dass mindestens eines der Kommunikationsendgeräte 10, 20 stationär ausgebildet ist.

Beispielsweise kann an einem öffentlichen Ort ein zentraler, stationärer Speicher aufgebaut sein, auf den ein mobiles Kommunikationsendgerät 10, 20 Daten übertragen kann. So kann ein Benutzer im Vorübergehen mit einer Geste die Übertragung eines Nutzdatensatzes 90 auf diesen stationären Speicher einleiten.

Ein anderer Benutzer geht an diesem stationären Speicher vorbei und kann dann innerhalb der zeitlichen und räumlichen Bedingungen den Nutzdatensatz 90 von diesem Speicher abrufen, ohne dass ihm die Zugangsdaten des sendenden Kommunikationsendgerätes 10 bekannt sein müssen. Dieser stationäre Zwischenspeicher erfüllt somit die Rolle eines Kommunikationsendgerätes, indem jeweils Daten mit mobilen Datenkommunikationsendgeräten 10, 20 ausgetauscht werden.

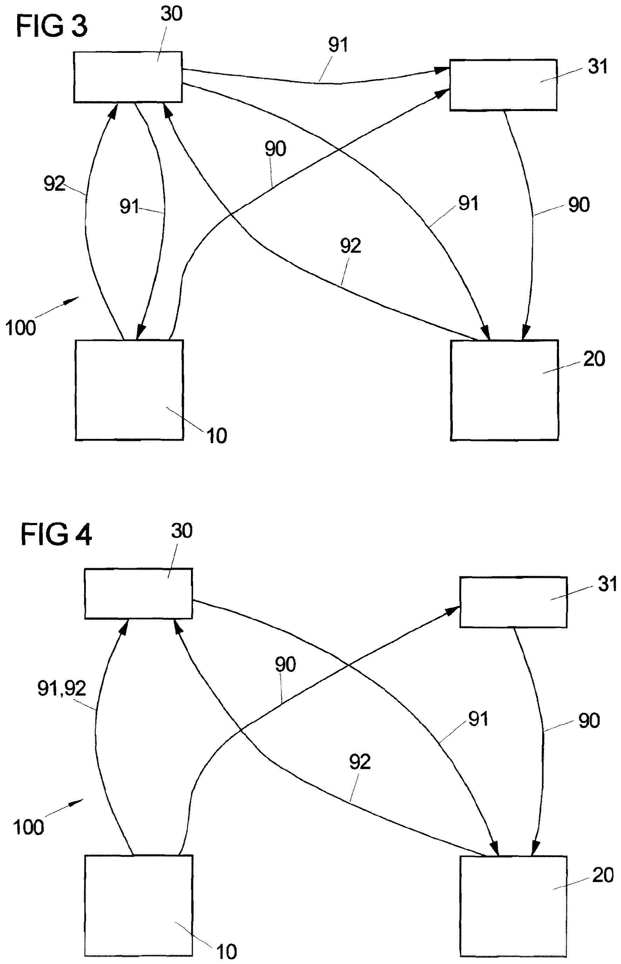

In Fig. 3 und 4 werden Ausführungsformen beschrieben, bei denen der Nutzdatensatz 90 mittels eines Datenaustauschknotens 31 über das Datennetz 100 übertragen wird. Dazu war ein Nutzdatensatz 90 vorher auf den Datenaustauschknoten 31 übertragen worden. Die Vermittlungseinheit 30, die datentechnisch mit dem Datenaustauschknoten 31 gekoppelt ist, übermittelt die Nutzdatenadresse 91 an den Sender, d.h. ein Kommunikationsendgerät 10.

Ausgang des eigentlichen Datenaustauschs ist wie bei den zuvor beschriebenen Ausführungsformen (Fig. 1, 2) eine Kommunikationsanfrage 200 zwischen zwei Kommunikationsendgeräten 10, 20. Dies führt dazu, dass die Vermittlungseinheit 30 die Informationen 92 über den Ort und die Zeit der Kommunikationsanfrage 200 durch die Mittel 40 zur Auswertung der räumlichen Distanz und der Mittel 50 zur Auswertung von zeitlichen Abständen bestimmt.

Die Vermittlungseinheit 30 prüft, ob die räumlichen und zeitlichen Bedingungen (Schwellenwerte) für eine Datenübertragung erfüllt sind. In Abhängigkeit davon wird die Nutzdatenadresse 91 an den Empfänger, d.h. das zweite Kommunikationsendgerät 20, übermittelt. Mit dieser Nutzdatenadresse 91 kann nun der Nutzdatensatz 90 vom Datenaustauschknoten 31 heruntergeladen werden.

Durch die Zwischenschaltung eines Datenaustauschknotens 31 wird eine noch weitergehende Trennung und / oder Entkopplung der Datenübertragung verwirklicht.

In Fig. 4 wird eine Variation der Ausführungsform gemäß Fig. 3 dargestellt, so dass auf die Beschreibung der Fig. 3 Bezug genommen werden kann.

Im Unterschied zu der Ausführungsform gemäß Fig. 3 werden in der Ausführungsform gemäß Fig. 4 die Informationen bezüglich Ort und Zeit und die Nutzdatenadresse 91 des Nutzdatensatzes 90 zwischen dem sendenden ersten Kommunikationsendgerät 10 und der Vermittlungseinheit 30 ausgetauscht, d.h. der Sender wählt die Adresse des Nutzdatensatzes 90.

Die Übertragung des Nutzdatensatzes 90 zum zweiten Kommunikationsendgerät 20 des Empfängers erfolgt dann wie im Zusammenhang mit Fig. 3 beschrieben.

Des Weiteren ist es möglich, bereits im Vorfeld eine Kopie aller auf dem Kommunikationsendgerät 10, 20 befindlichen Inhalte in dem Datenaustauschknoten 31 zu speichern, so dass die Übertragung der eigentlichen Nutzdatensätze 90 vom sendenden Kommunikationsendgerät 10, 20 zur Datenaustauscheinrichtung entfallen kann und von Empfängern dort direkt abgerufen werden kann.

Ist die Übermittlung erfolgt, werden in der Regel sowohl die Daten über die erfolgte Vermittlung sowie vor allem die zwischengespeicherten Daten auf der Vermittlungseinheit 30 gelöscht. Es ist aber auch möglich, dass ein Sender einen längeren Zeitraum wählt und dadurch Daten an einem bestimmten geographischen Ort für längere Zeit hinterlegen kann.

Für eine derartige "Datenhinterlegung" muss dass System aber spezielle Vorkehrungen treffen, damit eine solche Hinterlegung nicht zu unnötigen Kollisionen mit kurzzeitigem Datenaustausch in dem Gebiet führt. So kann das System entweder eine Sonderbehandlung für derartige Daten durchführen, oder eine allgemeine Priorisierung der Daten vornehmen, wobei Daten mit hoher Hinterlegungsdauer bei der Zuordnung einer geringeren Priorität erhalten.

Des Weiteren ist es sinnvoll, wenn die Vermittlungseinheit 30 zusätzliche Schutzmaßnahmen gegen Missbrauch erhält. Zum einen kann die Vermittlungseinheit 30 mit einer Benutzerauthentifizierung arbeiten, bei der sich die Benutzer zuvor einmalig registrieren müssen und Nutzer, die Missbrauch treiben, ausgeschlossen werden können.

Des Weiteren ist es in der Praxis sinnvoll, die Zahl der Kommunikationsanfragen 200 eines Teilnehmers auf ein praxisübliches Maß zu begrenzen, um Denial-of-Service Angriffe und Lauschangriffe durch Teilnehmer zu vermeiden, die sonst mit manipulierten Programmen in großer Zahl Vermittlungsanfragen an das System senden können, die nicht ihrem tatsächlichen Aufenthaltsort entsprechen.

Als weitere Maßnahme, um das unautorisierte Versenden von Kommunikationsanfragen 200 zu erschweren, kann die Kommunikationsanfrage 200 digital signiert werden.

Neben der 1 zu 1 Übertragung kann auch gezielt Information an eine lokal anwesende Gruppe gesendet werden. So kann etwa ein Vortragender Informationen in den Vortragssaal hineinwerfen, die von Besuchern aufgefangen werden können.

Des Weiteren kann eine Gruppe von Personen bei einem Meeting gegenseitig die Adressen austauschen, indem alle Anwesenden gleichzeitig Sende- und Empfangsfunktion aktiveren.

In Fig. 5 ist eine Ausführungsform für eine Auswertung der räumlichen Distanz zwischen zwei Kommunikationsendgeräten 10, 20 dargestellt.

In einer Region, d.h. einem definierten räumlichen Bereich werden Ortskoordinaten x₁, x₂ definiert. Die Koordinate des ersten Kommunikationsendgerätes 10 sei P1, die Koordinate des zweiten Kommunikationsendgerätes 20 sei P2. Ein drittes Kommunikationsendgerät habe die Koordinaten P3.

Wenn nun Kommunikationsanfragen 200 von den Kommunikationsendgeräten 10, 20 ausgehen, so erkennt die hier nicht dargestellte Vermittlungseinheit 30 die Aufenthaltsorte der drei Kommunikationsendgeräte 10, 20. Dabei ordnet die Vermittlungseinheit 30 den Orten P1, P2, P3 jeweils einen Toleranzbereich K1, K2, K3 zu. Die Radien der kreisförmigen Toleranzbereiche K1, K2, K3 hängen von der Genauigkeit der Bestimmungsmethode für den Ort ab. Die hier dargestellten kreisförmigen Toleranzbereiche K1, K2, K3 sind nur beispielhaft, da auch räumliche Strukturen, wie z.B. Kugeln verwendbar sind.

Die Bestimmung eines Ortes mit einem GPS Verfahren ist z.B. in der Regel genauer als die Bestimmung mit einem Funkzellenverfahren. Durch die Toleranzbereiche K1, K2, K3 wird ein Wahrscheinlichkeitsbereich definiert, in dem die Kommunikationsendgeräte 10, 20 sich aufhalten.

Das Mittel 40 zur Auswertung der räumlichen Daten erkennt, dass sich die Toleranzbereiche K1, K2 überlappen, so dass der Abstand zwischen P1 und P2 einen vorgegebenen Schwellenwert unterschritten hat. Damit ist eine notwendige Bedingung für die Durchführung eines Datenaustauschs zwischen den Kommunikationsendgeräten 10, 20 erfüllt. Sollte das dritte Kommunikationsendgerät bei P3 zur gleichen Zeit ebenfalls eine Kommunikationsanfrage 200 ausführen, so würde keine Datenübertragung stattfinden, da die räumliche Bedingung für eine Datenübertragung nicht erfüllt ist.

Somit kann das mit der Vermittlungseinheit 30 gekoppelte Verbindungsmittel 60 (hier nicht dargestellt) den Ort des mindestens einen Kommunikationsendgerätes 10, 20 als Fläche oder auch als Raumvolumen ermitteln und die räumliche Distanz durch Inklusion eines Ortes oder Inklusion oder Überschneiden der Flächen oder Räume feststellen.

In Fig. 5 sind aus Gründen der Übersichtlichkeit die Ergebnisse der Ortsbestimmung von drei Kommunikationsendgeräte 10, 20 dargestellt. Aus den ermittelten Koordinaten P1, P2 und P3 in Verbindung mit den zugehörigen Genauigkeitsumkreisen K1, K2 und K3 wird ersichtlich, dass nur die Kommunikationsendgeräte 10, 20 an den Positionen P1, P2 miteinander gekoppelt werden sollen und ein weiteres Kommunikationsendgeräte an der Position P3 mit dem Genauigkeitsumkreis K3 nicht für einen Datenaustausch in Betracht gezogen werden soll. Für den Fachmann ist klar, dass die beschriebenen Bedingungen für drei Kommunikationsendgeräte 10, 20 sich ohne Weiteres auf mehr Geräte übertragen lassen. Auch ist klar, dass diese Bedingungen für die unterschiedlichen Kommunikationsmodi 1 zu 1 Kommunikation, 1 zu mehreren, mehrere zu mehreren und mehrere zu 1 gelten.

In Fig. 6 wird schematisch eine weitere Bedingung für die Aufnahme und Durchführung des Datenaustauschs dargestellt, nämlich die Funktion des Mittels 50 für die Auswertung des zeitlichen Abstands (Zeitfenster) zwischen Kommunikationsanfragen.

Hier sind drei Kommunikationsanfragen 201, 202, 203 durch Kreuze symbolisiert auf einem Zeitstrahl dargestellt. Im ersten Fall erfolgen die ersten beiden Kommunikationsanfragen 201, 202 innerhalb eines relativ kurzen Intervalls t₁. Der Schwellenwert tₘₐₓ₁ ist hier länger, so dass die Vermittlungseinheit 30 erkennt, dass hier zwei Kommunikationsanfragen 201, 202 innerhalb einer bestimmten Zeit gestellt wurden, so dass eine notwendige Bedingung für die Auslösung der Datenübertragung erfüllt ist.

Zu einem späteren Zeitpunkt, nämlich t₂ nach t₁, registriert die Vermittlungseinheit 30 eine dritte Kommunikationsanfrage 203. Diese ist jedoch deutlich außerhalb des Schwellenwertes tₘₐₓ₂, wobei im gewählten Beispiel tₘₐₓ₂ größer ist als tₘₐₓ₁. Da der Schwellenwert überschritten wird, ist die notwendige Bedingung für die Datenübertragung nicht erfüllt.

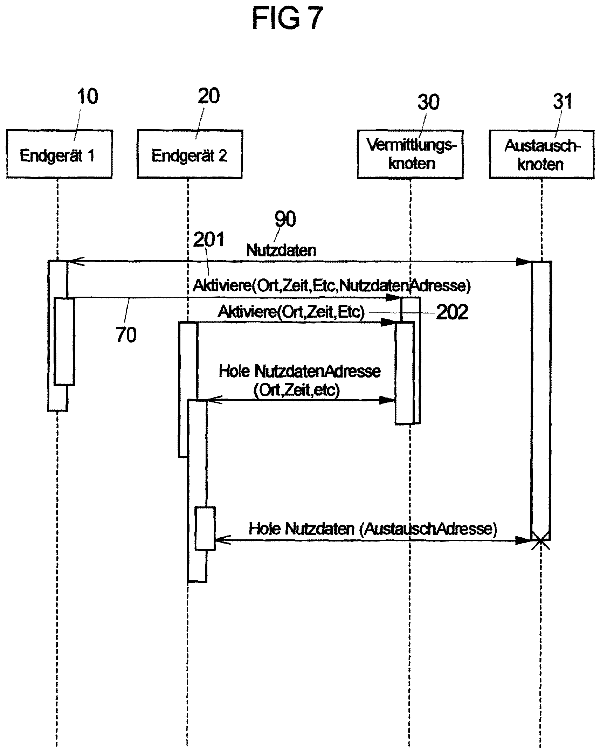

In Fig. 7 ist eine UML Darstellung des Datenaustauschs dargestellt in einer beispielhaften Ausführungsform dargestellt, bei der ein Datenaustauschknoten 31 verwendet wird.

In dieser Ausführungsform wird zunächst ein Nutzdatensatz 91 vom ersten Kommunikationsendgerät 10 auf den Datenaustauschnoten 31 übertragen.

Zu einem späteren Zeitpunkt richtet das erste Kommunikationsendgerät 10 eine erste Kommunikationsanfrage 201 an die Vermittlungseinheit 30. Damit werden Ort, Zeit und die Adresse des Nutzdatensatzes 90 ermittelt und übertragen. Hier ist alternativ noch ein Anfragedatensatz 70 dargestellt, der eine eindeutige Identifizierung erlaubt, z.B. eine vereinbarte ID.

Anschließend wird eine zweite Kommunikationsanfrage 202 vom zweiten Kommunikationsendgerät 20 an die Vermittlungseinheit 30 übermittelt, die anzeigt, dass das zweite Kommunikationsendgerät 20 empfangsbereit gemacht wird. Auch hier werden Ort und Zeit ermittelt und übertragen.

Der Abstand der beiden Kommunikationsanfragen 201, 202 erfolgt innerhalb eines zeitlichen Schwellenwertes tₘₐₓ (d.h. innerhalb eine vorbestimmten Zeitfensters) und eines räumlichen Schwellenwertes (d.h. innerhalb einer vorbestimmten räumlichen Distanz). Die numerischen Werte für die Schwellenwerte hängen insbesondere von der Datenübertragungsart und von dem Datenübertragungsmodus (z.B. 1 zu 1, 1 zu viele etc.) ab.

Das hier nicht dargestellte Verbindungsmittel 60 der Vermittlungseinheit 30 registriert mit einem hier nicht gesondert dargestellten Mittel 40 zur Auswertung der räumlichen Distanz der Kommunikationsendgeräte 10, 20 und einen ebenfalls hier nicht dargestellten Mittel 50 zur Auswertung der zeitlichen Abstände der Kommunikationsanfragen 201, 202, dass die notwendigen Bedingungen für den Datenaustausch erfüllt sind. Somit kann der Nutzdatensatz 90 vom Datenaustauschknoten 31 zum zweiten Kommunikationsendgeräte 20 übertragen werden.

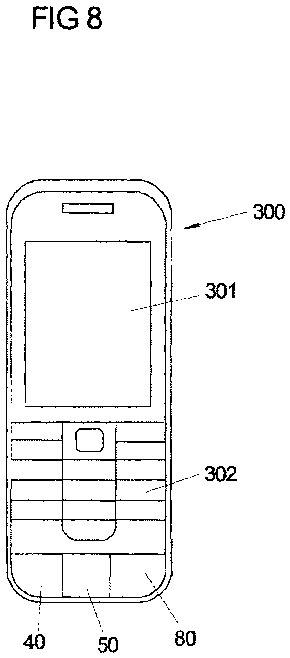

In Fig. 8 ist schematisch ein Kommunikationsendgerät 300 dargestellt, das grundsätzlich die Funktionen eines Smartphones aufweist. Insbesondere kann es Daten an das Internet senden und Daten vom Internet empfangen. Da Kommunikationsendgerät 300 verfügt über einen Bildschirm 301 und eine Tastatur 302 zur Eingabe von Daten.

Das Kommunikationsendgerät 300 ist so ausgebildet und eingerichtet, dass es im System und Verfahren, deren verschiedene Ausführungsformen oben beschrieben worden sind, verwendbar ist. So ist das Kommunikationsendgerät 300 mit einem Mittel 40 zur Auswertung der räumlichen Distanz zu einem anderen Kommunikationsendgerät 10, 20 und einem ein Mittel 50 zur Auswertung von zeitlichen Abständen von Kommunikationsanfragen 200 an eine hier nicht dargestellte Vermittlungseinheit 30 ausgestattet. Eine Kommunikationsanfrage 200 kann z.B. durch einen Tastendruck ausgelöst werden. Zusätzlich oder alternativ kann aber eine Auslösung durch Gesten, d.h. bestimmte Bewegungsmuster erfolgen. Bewegungssensoren 80 im oder am Datenkommunikationsendgerät 300 dienen dazu die Bewegung des Datenkommunikationsendgerätes 300 im Raum zu erfassen. Eine wurfartige Bewegung kann z.B. ohne Weiteres als Kommunikationsanfrage 200 erkannt werden.

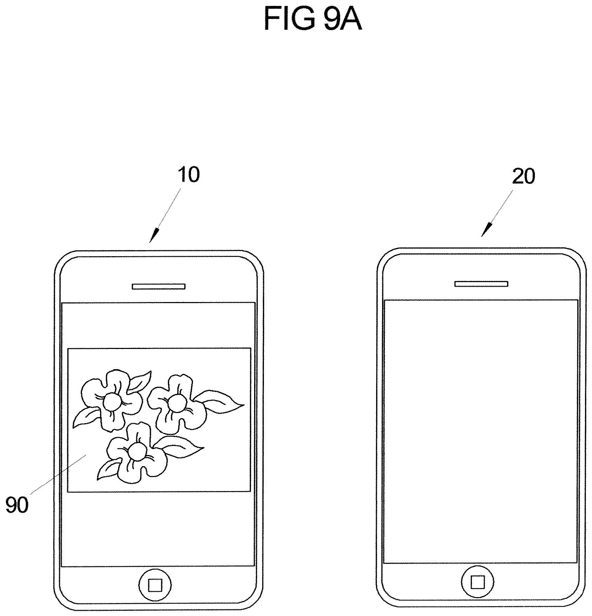

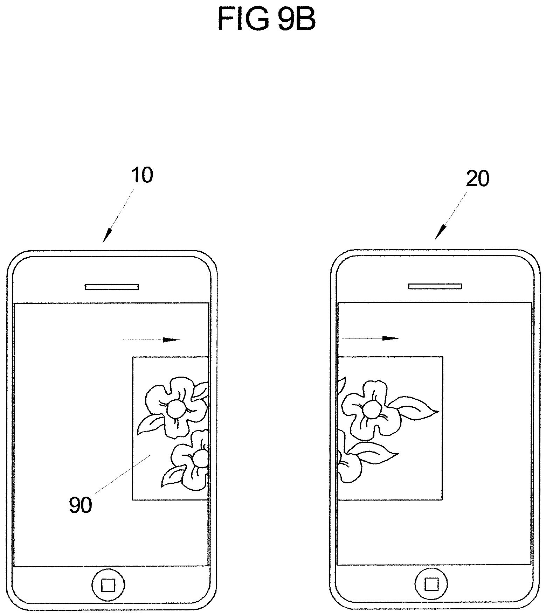

In Fig. 9A, 9B wird eine Datenübertragung zwischen zwei Kommunikationsendgeräten 10, 20, die parallel zueinander angeordnet sind, dargestellt. Bei den Kommunikationsendgeräten 10, 20 handelt es sich um Smartphones, d.h. Geräte die außer den üblichen Eigenschaften eines Mobiltelefons, auch noch die Möglichkeiten aufweisen, Dateien, wie z.B. Bild- oder Textdateien anzuzeigen und / oder zu bearbeiten. Die Kommunikationsendgeräte 10, 20 sind dabei mit einem Touchscreen ausgestattet. Vorteilhafterweise findet zwischen den Kommunikationsendgeräten 10, 20 eine 1-zu-1 Datenübertragung statt.

Mit den oben beschrieben Möglichkeiten wurde ermittelt, dass die räumliche Distanz zwischen den Kommunikationsendgeräten 10, 20 einen bestimmten Schwellenwert unterschritten hat, so dass die grundsätzliche Möglichkeit einer Datenübertragung zwischen den beiden Kommunikationsendgeräten 10, 20 automatisch festgestellt wurde.

In Fig. 9A ist die Ausgangssituation dargestellt.
Auf dem Bildschirm des ersten Kommunikationsendgerätes 10 ist eine Datei (z.B. ein Bild) als Nutzdatensatz 90 dargestellt. Der Bildschirm des zweiten Kommunikationsendgerätes 20 ist leer.

In Fig. 9B ist nun der Kommunikationsvorgang dargestellt. Wenn nun der Benutzer des ersten Kommunikationsendgeräte 10 den Nutzdatensatz in Richtung auf einen der Ränder des Bildschirms des Kommunikationsendgeräte 10 verschiebt, so wird dies automatisch als eine Kommunikationsanfrage 200, 201, 202, 203 auf der Seite des sendenden Kommunikationsendgerätes 10 verstanden. Durch die Bewegung wird eine 1-zu-1 Datenübertragung initiiert.

Das empfangende zweite Kommunikationsendgeräte 20 erkennt die Kommunikationsanfrage 200, 201, 202, 203 und nimmt das Bild, dass vom ersten Kommunikationsendgeräte 10 gesendet wird entgegen. Dabei wird der Vorgang des Sendens durch ein Schieben über den Rand des Bildschirms des ersten Kommunikationsendgeräts 10 hinaus symbolisiert. Der Vorgang des Empfanges beim zweiten Kommunikationsendgerätes 20 wird als ein Herausschieben aus dem Bildschirmrand des dargestellt. Dabei ist die Darstellung so gewählt, dass gerade der beim ersten Kommunikationsendgerät 10 über den Rand hinausgeschobene Teil des Bildes 90 auf dem Bildschirm des zweiten Kommunikationsendgeräts 20 auftaucht. Insgesamt entsteht der Eindruck, dass das Bild, d.h. der Nutzdatensatz 90 von einem Bildschirm auf einen anderen Bildschirm verschoben wird.

### Bezugszeichen

- 10: erstes Kommunikationsendgerät
- 20: zweites Kommunikationsendgerät
- 30: Vermittlungseinheit
- 31: Datenaustauschknoten
- 40: Mittel zur Auswertung der räumlichen Distanz
- 50: Mittel zur Auswertung zeitlicher Abstände
- 60: Verbindungsmittel
- 70: Anfragedatensatz
- 80: Gesteninterpretationsmittel
- 90: Nutzdatensatz
- 91: Nutzdatenadresse
- 92: Orts- und Zeitinformationen

- 100: Datennetzwerk
- 200: Kommunikationsanfrage
- 201: erster Kommunikationsanfrage
- 202: zweite Kommunikationsanfrage
- 203: dritte Kommunikationsanfrage

- 300: Kommunikationsendgerät
- 301: Bildschirm
- 302: Tastatur

## Patentansprüche

1. System zur Übertragung von Daten zwischen mindestens zwei Kommunikationsendgeräten (10, 20), mit
a) mindestens einem ersten Kommunikationsendgerät (10) und mindestens einem zweiten Kommunikationsendgerät (20), wobei mindestens ein Kommunikationsendgerät (10, 20) als mobiles Gerät, insbesondere Handgerät, ausgebildet ist,
b) einer mit allen Kommunikationsendgeräten (10, 20) über ein Datennetzwerk (100) koppelbaren Vermittlungseinheit (30),
c) einem Mittel (40) zur Berechnung und / oder Auswertung der räumlichen Distanz der Kommunikationsendgeräte (10, 20),
d) einem Mittel (50) zur Bestimmung und / oder Auswertung von zeitlichen Abständen von Kommunikationsanfragen (200, 201, 202, 203) an die Vermittlungseinheit (30), um eine Datenübertragung zwischen den mindestens zwei Kommunikationsendgeräten (10, 20) einzuleiten, wobei ein der Vermittlungseinheit (30) zugeordnetes Verbindungsmittel (60), in Abhängigkeit von vorgebbaren Schwellenwerten der räumlichen Distanz der mindestens zwei Kommunikationsendgeräte (10, 20) und des zeitlichen Abstands zwischen den Kommunikationsanfragen (200, 201, 202, 203) die Datenübertragung steuert, und
e) wobei die Kommunikationsanfrage an mindestens einem Kommunikationsendgerät (10, 20) durch Betätigen mindestens einer Taste an mindestens einem Kommunikationsendgerät (10, 20), eine Bewegung des mindestens einen Kommunikationsendgerätes (10, 20) im Raum, ein akustisches Signal, eine Spracheingabe und / oder Berühren des berührungssensitiven Bildschirms auslösbar ist und eine entsprechende Kodierung in der Kommunikationsanfrage (200, 201, 202, 203) und / oder dem Anfragedatensatz (70) gespeichert wird.

2. System nach Anspruch 1, wobei das Verbindungsmittel (60) den Ort des mindestens einen Kommunikationsendgerätes (10, 20) als Fläche (K1, K2, K3) oder Raumvolumen ermittelt und die räumliche Distanz durch Inklusion eines Ortes (P1, P2, P3) oder Inklusion oder Überschneiden der Flächen (K1, K2, K3) oder Räume feststellbar ist.

3. System nach einem der vorhergehen Ansprüche, wobei der Zeitpunkt der Signalisierung der Kommunikationsanfrage (200, 201, 202, 203) durch eine Uhr, insbesondere im mindestens einen Kommunikationsendgerät (10, 20) gemessen wird und die Abweichung der Uhren in den verschiedenen Kommunikationsendgeräten (10, 20) durch einen Kommunikationsvorgang ausgeglichen wird.

4. System nach einem der vorhergehen Ansprüche, wobei mit der Vermittlungseinheit (30) der Zeitpunkt der Signalisierung der Kommunikationsanfrage (200, 201, 202, 203) durch den Zeitpunkt des Eintreffens von Datensätzen bei der Vermittlungseinheit (30) messbar ist.

5. System nach einem der vorhergehenden Ansprüche, wobei von dem mindestens einen Kommunikationsendgerät (10, 20) die Kommunikationspartner eindeutig kennzeichnender Anfragedatensatz (70) an die Vermittlungseinheit (30) übermittelbar ist.

6. System nach einem der vorhergehen Ansprüche, wobei vor der Signalisierung der Kommunikationsanfrage (200, 201, 202, 203) ein zu sendender Nutzdatensatz (90) auswählbar ist, insbesondere wobei der Nutzdatensatz (90) aus einer vordefinierten Menge von Nutzdatensätzen (90) automatisch anhand spezifischer Merkmale der Signalisierung der Kommunikationsanfrage (200, 201, 202, 203), insbesondere der Kodierung des Anfragedatensatzes (70), auswählbar ist.

7. System nach mindestens einem der vorhergehenden Ansprüche, wobei eine multidirektionale Verbindung zwischen mehr als zwei Kommunikationsendgeräten (10, 20) aufbaubar ist, die das anschließende Senden und Empfangen mehrerer Nutzdatensätze (90) zwischen den Kommunikationsendgeräten (10, 20) erlaubt und ggf. so lange fortbesteht, bis sie vom Teilnehmer abgebaut wird.

8. System nach einem der vorhergehenden Ansprüche, wobei durch eine Signalisierung einer Kommunikationsanfrage (200, 201, 202, 203) durch das Vermittlungsmittel (60) Verbindungen auf genau ein Kommunikationsendgerät (10) als Sender und genau ein Kommunikationsendgerät (20) als Empfänger einschränkbar sind und das Vermittlungsmittel bei mehreren aufgrund räumlicher und zeitlicher Nähe in Frage kommenden Sendern oder Empfängern die Vermittlung unterbindet.

9. System nach einem der vorhergehenden Ansprüche, wobei mittels Signalisierung durch den Benutzer die Vermittlung auf genau einen Empfänger eingeschränkt wird und das Vermittlungssystem bei mehreren aufgrund räumlich und zeitlich in Frage kommenden Empfängern die Vermittlung unterbindet und / oder wobei mittels Signalisierung durch den Benutzer die Vermittlung auf genau einen Sender eingeschränkt wird und das Vermittlungssystem bei mehreren aufgrund räumlich und zeitlich in Frage kommenden Sendern die Vermittlung unterbindet.

10. System nach einem der vorhergehenden Ansprüche, wobei mindestens ein Nutzdatensatz ausschließlich zwischen zwei Kommunikationsendgeräten (10, 20) ausgetauscht wird und dies der Vermittlungseinheit (30) durch ein physisches Aneinanderstoßen der Kommunikationsendgeräte (10, 20) signalisiert wird, insbesondere wobei das Aneinanderstoßen der Kommunikationsendgeräte (10, 20) durch Beschleunigungssensoren, Abstandssensoren und / oder Mikrofone der Kommunikationsendgeräte (10, 20) registrierbar ist.

11. System nach einem der vorhergehenden Ansprüche mit einem Gesteninterpretationsmittel (80), mit dem eine Bewegung eines Kommunikationsendgerätes (10, 20) auswertbar ist, insbesondere wobei eine Bewegung eines sendenden Kommunikationsendgerätes (10) als Wurf- oder Sendegeste interpretierbar ist und / oder wobei eine Bewegung eines empfangenen Kommunikationsendgerätes (20) als Empfangs- bzw. Fanggeste interpretierbar ist.

12. System nach mindestens einem der vorhergehenden Ansprüche, wobei das Mittel (40) zur Berechnung und / oder Auswertung der räumlichen Distanz der Kommunikationsendgeräte (10, 20) Daten mindestens eines WLAN- Netzes, Daten mindestens eines Mobilfunknetzes, Daten eines Bluetooth-Netzes und / oder Daten mindestens eines GPS-Systems auswertet.

13. System nach mindestens einem der vorhergehenden Ansprüche, wobei durch die Bewegung eines Objektes (90) auf einem Bildschirm eines ersten Kommunikationsendgerätes (10) eine Datenverbindung, insbesondere eine 1-zu-1 Datenverbindung zu einem zweiten Kommunikationsendgerät (20) aufgebaut wird, so dass insbesondere das Objekt (90) vom Bildschirm des ersten Kommunikationsendgerätes (10) auf den Bildschirm des zweiten Kommunikationsendgerätes (20) bewegbar ist.

14. Verfahren zur Übertragung von Daten zwischen mindestens einem ersten Kommunikationsendgerät (10) und einem zweiten Kommunikationsendgerät (20), wobei
a) mindestens ein Kommunikationsendgerät (10, 20) als mobiles Gerät, insbesondere als Handgerät ausgebildet ist, wobei
b) Daten über ein Datennetzwerk (100) zwischen den Kommunikationsendgeräten (10, 20) und einer damit koppelbaren Vermittlungseinheit (30) austauschbar sind, wobei
c) ein Mittel (40) die räumliche Distanz zwischen den mindestens zwei Kommunikationsendgeräten (10, 20) berechnet und / oder auswertet,
d) ein Mittel (50) die zeitlichen Abstände von Kommunikationsanfragen (200, 201, 202, 203) an die Vermittlungseinheit (30) bestimmt und / oder auswertet,
e) in Abhängigkeit von der räumlichen Distanz und den zeitlichen Abständen eine Datenübertragung zwischen den mindestens zwei Kommunikationsendgeräten (10, 20) eingeleitet wird, wobei ein Verbindungsmittel (60), in Abhängigkeit von vorgebbaren Schwellenwerten der räumlichen Distanz der mindestens zwei Kommunikationsendgeräte (10, 20) und dem zeitliche Abstand der Kommunikationsanfragen (200, 201, 202, 203) die Datenübertragung steuert,
f) wobei die Kommunikationsanfrage an mindestens einem Kommunikationsendgerät (10, 20) durch Betätigen mindestens einer Taste an mindestens einem Kommunikationsendgerät (10, 20), eine Bewegung des mindestens einen Kommunikationsendgerätes (10, 20) im Raum, ein akustisches Signal, eine Spracheingabe und / oder Berühren des berührungssensitiven Bildschirms auslösbar ist und eine entsprechende Kodierung in der Kommunikationsanfrage (200, 201, 202, 203) und / oder dem Anfragedatensatz (70) gespeichert wird.

## Claims

1. System for transmitting data between at least two communication terminals (10, 20), with
a) at least one first communication terminal (10) and at least one second communication terminal (20), wherein at least one communication terminal (10, 20) is designed as a mobile device, in particular a hand-held device,
b) a switching unit (30) connectable via a data network (100) to all communication terminals (10, 20),
c) a means (40) for calculating and/or evaluating the spatial distance of the communication terminals (10, 20),
d) a means (50) for determining and/or evaluating time intervals of communication inquiries (200, 201, 202, 203) to the switching unit (30) in order to initiate a data transmission between the at least two communication terminals (10, 20), wherein a connecting means (60) allocated to the switching unit (30) controls the data transmission depending on predeterminable threshold values of the spatial distance of the at least two communication terminals (10, 20) and the time interval between the communication inquiries (200, 201, 202, 203), and
e) wherein the communication inquiry is triggerable on at least one communication terminal (10, 20) by actuating at least one key on at least one communication terminal (10, 20), a movement of the at least one communication terminal (10, 20) in the space, an audible signal, a voice input and/or touching of the touch-sensitive display screen, and a corresponding coding is stored in the communication inquiry (200, 201, 202, 203) and/or the inquiry data record (70).

2. System according to Claim 1, wherein the connecting means (60) determines the location of the at least one communication terminal (10, 20) as an area (K1, K2, K3) or spatial volume, and the spatial distance can be established through inclusion of a location (P1, P2, P3) or inclusion or overlapping of the areas (K1, K2, K3) or spaces.

3. System according to one of the preceding claims, wherein the time of the signaling of the communication inquiry (200, 201, 202, 203) is measured by a clock, in particular in the at least one communication terminal (10, 20), and the deviation of the clocks in the various communication terminals (10, 20) is compensated through a communication process.

4. System according to one of the preceding claims, wherein the time of the signaling of the communication inquiry (200, 201, 202, 203) is measurable with the switching unit (30) by means of the time of arrival of data records in the switching unit (30).

5. System according to one of the preceding claims, wherein an inquiry data record (70) uniquely identifying the communication partners is transferable from the at least one communication terminal (10, 20) to the switching unit (30).

6. System according to one of the preceding claims, wherein a useful data record (90) to be transmitted is selectable before the signaling of the communication inquiry (200, 201, 202, 203), in particular wherein the useful data record (90) is automatically selectable from a predefined quantity of useful data records (90) on the basis of specific characteristics of the signaling of the communication inquiry (200, 201, 202, 203), in particular the coding of the inquiry data record (70).

7. System according to at least one of the preceding claims, wherein a multidirectional connection can be set up between more than two communication terminals (10, 20) which allows the subsequent transmission and reception of a plurality of useful data records (90) between the communication terminals (10, 20) and, if necessary, continues until it is cleared down by the user.

8. System according to one of the preceding claims, wherein, due to a signaling of a communication inquiry (200, 201, 202, 203) by the switching means (60), connections are restrictable to precisely one communication terminal (10) as the transmitter and precisely one communication terminal (20) as the receiver, and the switching means, in the event of a plurality of transmitters or receivers being eligible on the basis of spatial and temporal proximity, prevents the switching.

9. System according to one of the preceding claims, wherein the switching is restricted to precisely one receiver by means of switching by the user, and the switching system, in the event of a plurality of receivers being eligible spatially and temporally, prevents the switching and/or wherein the switching is restricted by means of signaling by the user to precisely one transmitter, and the switching system, in the event of a plurality of transmitters being eligible spatially and temporally, prevents the switching.

10. System according to one of the preceding claims, wherein at least one useful data record is exchanged exclusively between two communication terminals (10, 20) and this is signaled to the switching unit (30) by a physical knocking together of the communication terminals (10, 20), in particular wherein the knocking together of the communication terminals (10, 20) can be registered by acceleration sensors, distance sensors and/or microphones of the communication terminals (10, 20).

11. System according to one of the preceding claims having a gesture interpretation means (80), with which a movement of a communication terminal (10, 20) can be evaluated, in particular wherein a movement of a transmitting communication terminal (10) is interpretable as a throw or transmit gesture and/or wherein a movement of a receiving communication terminal (20) is interpretable as a receive or catch gesture.

12. System according to at least one of the preceding claims, wherein the means (40) for calculating and/or evaluating the spatial distance of the communication terminals (10, 20) evaluates data of at least one WLAN network, data of at least one mobile network, data of a Bluetooth network and/or data of at least one GPS system.

13. System according to at least one of the preceding claims, wherein, due to the movement of an object (90) on a display screen of a first communication terminal (10), a data connection, in particular a one-to-one data connection to a second communication terminal (20), is set up so that, in particular, the object (90) is movable from the display screen of the first communication terminal (10) onto the display screen of the second communication terminal (20).

14. Method for transmitting data between at least one first communication terminal (10) and a second communication terminal (20), wherein
a) at least one communication terminal (10, 20) is designed as a mobile device, in particular a hand-held device,
b) wherein data are exchangeable via a data network (100) between the communication terminals (10, 20) and a switching unit (30) connectable thereto, wherein
c) a means (40) calculates and/or evaluates the spatial distance between the at least two communication terminals (10, 20),
d) a means (50) determines and/or evaluates the time intervals of communication inquiries (200, 201, 202, 203) made to the switching unit (30),
e) a data transmission between the at least two communication terminals (10, 20) is initiated depending on the spatial distance and time intervals, wherein a connecting means (60) controls the data transmission depending on predeterminable threshold values of the spatial distance of the at least two communication terminals (10, 20) and the time interval of the communication inquiries (200, 201, 202, 203),
f) wherein the communication inquiry is triggerable on at least one communication terminal (10, 20) by actuating at least one key on at least one communication terminal (10, 20), a movement of the at least one communication terminal (10, 20) in the space, an audible signal, a voice input and/or touching of the touch-sensitive display screen, and a corresponding coding is stored in the communication inquiry (200, 201, 202, 203) and/or the inquiry data record (70).

## Revendications

1. Système de transmission de données entre au moins deux terminaux de communication (10, 20), avec
a) au moins un premier terminal de communication (10) et au moins un second terminal de communication (20), dans lequel au moins un terminal de communication (10, 20) est réalisé en tant qu'appareil mobile, en particulier appareil portatif,
b) une unité de commutation (30) pouvant être couplée à tous les terminaux de communication (10, 20) par le biais d'un réseau de données (100),
c) un moyen (40) de calcul et/ou d'évaluation de la distance spatiale des terminaux de communication (10, 20),
d) un moyen (50) de détermination et/ou d'évaluation d'écarts temporels de demandes de communication (200, 201, 202, 203) à l'unité de commutation (30) pour lancer une transmission de données entre les au moins deux terminaux de communication (10, 20), dans lequel un moyen de liaison (60) associé à l'unité de commutation (30) commande la transmission de données en fonction de valeurs de seuil prédéfinissables de la distance spatiale des au moins deux terminaux de communication (10, 20) et de l'écart temporel entre les demandes de communication (200, 201, 202, 203), et
e) dans lequel la demande de communication au niveau d'au moins un terminal de communication (10, 20) peut être déclenchée par un actionnement d'au moins une touche au niveau d'au moins un terminal de communication (10, 20), un mouvement de l'au moins un terminal de communication (10, 20) dans l'espace, un signal acoustique, une entrée vocale et/ou un toucher de l'écran tactile, et un codage correspondant est enregistré dans les demandes de communication (200, 201, 202, 203) et/ou dans le jeu de données de demande (70).

2. Système selon la revendication 1, dans lequel le moyen de liaison (60) détecte le lieu de l'au moins un terminal de communication (10, 20) en tant que surface (K1, K2, K3) ou volume spatial et la distance spatiale peut être constatée par inclusion d'un lieu (P1, P2, P3) ou inclusion ou intersection des surfaces (K1, K2, K3) ou des espaces.

3. Système selon l'une quelconque des revendications précédentes, dans lequel l'instant de la signalisation des demandes de communication (200, 201, 202, 203) est mesuré par une horloge, en particulier dans l'au moins un terminal de communication (10, 20), et la différence des horloges dans les différents terminaux de communication (10, 20) est compensée par un processus de communication.

4. Système selon l'une quelconque des revendications précédentes, dans lequel, avec l'unité de commutation (30), l'instant de la signalisation des demandes de communication (200, 201, 202, 203) peut être mesuré par l'instant de l'arrivée de jeux de données dans l'unité de commutation (30).

5. Système selon l'une quelconque des revendications précédentes, dans lequel, par l'au moins un terminal de communication (10, 20), un jeu de données de demande (70) caractérisant clairement les partenaires de communication peut être transféré à l'unité de commutation (30).

6. Système selon l'une quelconque des revendications précédentes, dans lequel, avant la signalisation des demandes de communication (200, 201, 202, 203), un jeu de données utiles (90) à émettre peut être sélectionné, en particulier que le jeu de données utiles (90) peut être sélectionné à partir d'une quantité prédéfinie de jeux de données utiles (90) automatiquement à l'aide de caractéristiques spécifiques de la signalisation des demandes de communication (200, 201, 202, 203), en particulier du codage du jeu de données de demande (70).

7. Système selon au moins l'une quelconque des revendications précédentes, dans lequel une liaison multidirectionnelle peut être établie entre plus de deux terminaux de communication (10, 20), laquelle permet l'émission et la réception subséquente de plusieurs jeux de données utiles (90) entre les terminaux de communication (10, 20) et, le cas échéant, reste présente jusqu'à ce qu'elle soit supprimée par l'abonné.

8. Système selon l'une quelconque des revendications précédentes, dans lequel, par une signalisation d'une demande de communication (200, 201, 202, 203) par le moyen de commutation (60), des liaisons peuvent être limitées à précisément un terminal de communication (10) en tant qu'émetteur et à précisément un terminal de communication (20) en tant que récepteur et le moyen de commutation met fin à la commutation en cas de plusieurs émetteurs et récepteurs entrant en ligne de compte en raison de leur proximité spatiale et temporelle.

9. Système selon l'une quelconque des revendications précédentes, dans lequel au moyen d'une signalisation par l'utilisateur, la commutation est limitée à précisément un récepteur et le système de commutation met fin à la commutation en cas de plusieurs récepteurs entrant en ligne de compte en raison spatiale et temporelle et/ou qu'au moyen d'une signalisation par l'utilisateur, la commutation est limitée à précisément un émetteur et le système de commutation met fin à la commutation en cas de plusieurs émetteurs entrant en ligne de compte en raison spatiale et temporelle.

10. Système selon l'une quelconque des revendications précédentes, dans lequel au moins un jeu de données utiles est échangé exclusivement entre deux terminaux de communication (10, 20) et cela est signalisé à l'unité de commutation (30) par une mise en contact physique des terminaux de communication (10, 20), en particulier que la mise en contact des terminaux de communication (10, 20) peut être enregistrée par des capteurs d'accélération, des capteurs de distance et/ou des microphones des terminaux de communication (10, 20).

11. Système selon l'une quelconque des revendications précédentes avec un moyen d'interprétation de gestes (80) avec lequel un mouvement d'un terminal de communication (10, 20) peut être évalué, en particulier qu'un mouvement d'un terminal de communication émetteur (10) peut être interprété en tant que geste de jet ou d'émission et/ou qu'un mouvement d'un terminal de communication récepteur (20) peut être interprété en tant que geste de réception ou de capture.

12. Système selon au moins l'une quelconque des revendications précédentes, dans lequel le moyen (40) pour calculer et/ou évaluer la distance spatiale des terminaux de communication (10, 20) évalue des données d'au moins un réseau WLAN, des données d'au moins un réseau de radiocommunication mobile, des données d'un réseau Bluetooth et/ou des données d'au moins un système GPS.

13. Système selon au moins l'une quelconque des revendications précédentes, dans lequel par le mouvement d'un objet (90) sur un écran d'un premier terminal de communication (10) est établie une liaison de données, en particulier une liaison de données un à un à un second terminal de communication (20), de sorte qu'en particulier l'objet (90) puisse être déplacé de l'écran du premier terminal de communication (10) sur l'écran du second terminal de communication (20).

14. Procédé de transmission de données entre au moins un premier terminal de communication (10) et un second terminal de communication (20), dans lequel
a) au moins un terminal de communication (10, 20) est réalisé en tant qu'appareil mobile, en particulier en tant qu'appareil portatif, dans lequel
b) des données peuvent être échangées par le biais d'un réseau de données (100) entre les terminaux de communication (10, 20) et une unité de commutation (30) pouvant être couplée à ceux-ci, dans lequel
c) un moyen (40) calcule et/ou évalue la distance spatiale entre les au moins deux terminaux de communication (10, 20),
d) un moyen (50) calcule et/ou évalue les écarts temporels de demandes de communication (200, 201, 202, 203) à l'unité de commutation (30),
e) en fonction de la distance spatiale et des écarts temporels, une transmission de données entre les au moins deux terminaux de communication (10, 20) est lancée, dans lequel un moyen de liaison (60) commande la transmission de données en fonction de valeurs de seuil prédéfinissables de la distance spatiale des au moins deux terminaux de communication (10, 20) et de l'écart temporel des demandes de communication (200, 201, 202, 203),
f) dans lequel la demande de communication peut être déclenchée au niveau d'au moins un terminal de communication (10, 20) par un actionnement d'au moins une touche au niveau d'au moins un terminal de communication (10, 20), un mouvement de l'au moins un terminal de communication (10, 20) dans l'espace, un signal acoustique, une entrée vocale et/ou un toucher de l'écran tactile et un codage correspondant est enregistré dans la demande de communication (200, 201, 202, 203) et/ou dans le jeu de données de demande (70).
